# EUROPEAN PATENT SPECIFICATION

(11) **EP 3 791 241 B1**
(45) Date of publication and mention of the grant of the patent: **28.02.2024**
(21) Application number: 19799357.9
(22) Date of filing: 06.05.2019
(51) Int. Cl.: G05D 1/02, G05D 1/00, G08G 1/00, G08G 1/0968, G01C 21/36, G01C 21/16, G01C 21/10, G01C 21/12, G01C 21/14, B60W 30/00, G01C 21/34

(54) **METHOD FOR CONTROL OF AN AUTONOMOUS VEHICLE WITH INTERNAL DELAYS**
VERFAHREN ZUR STEUERUNG EINES AUTONOMEN FAHRZEUGS MIT INTERNEN VERZÖGERUNGEN
PROCÉDÉ DE COMMANDE D'UN VÉHICULE AUTONOME À RETARDS INTERNES

(30) Priority: 10.05.2018 IL 25929218
(43) Date of publication of application: 17.03.2021
(73) Proprietor: Elta Systems Ltd., 77102 Ashdod (IL)
(72) Inventor: COHEN, Ofir, 975000 Tzelafon (IL); APPELMAN, Dina, 5940210 Bat-Yam (IL)
(74) Representative: Lavoix
(86) International application number: PCT/IL2019/050506
(87) International publication number: WO 2019/215726

(56) References cited:
- US-A- 5 548 516
- US-A1- 2015 120 048
- US-A1- 2018 086 351
- US-B1- 9 910 432

## Description

### TECHNICAL FIELD

The presently disclosed subject matter relates to autonomous navigation in general, and more particularly to navigating of an unmanned vehicle.

### BACKGROUND

An unmanned ground vehicle (UGV), also referred to as an uncrewed vehicle, is a motorized machine that travels by integrating sensory data with computer-based decision-making, for the purpose of autonomously driving the vehicle.

One issue related to UGV operation is autonomous navigation that includes planning a path and following it. When navigating the vehicle, information with respect to obstacles which are located within the traversed area is used for determining a route that avoids the obstacles to enable the vehicle to safely travel through the area. An obstacle can be any area or object which should be avoided. For example, an obstacle can be an object or area which either blocks or endangers the vehicle, e.g. slopes, holes in the ground, water reservoirs, walls, big rocks, overhead obstacles e.g., bridges, etc. Obstacles can also be any area which is desired to be avoided (e.g. noxious areas, habitat areas which should be avoided for ecological or animal conservation reasons, populated areas which should be avoided for safety reasons, etc.). A path to a destination is normally planned while striving to avoid collision with obstacles, and avoiding getting too close to obstacles, if possible. Path planning also strives to comply with other requirements, for example efficiency, e.g., avoiding paths which are unnecessarily elongated or winding. Once a path is planned or updated, it is followed by generating and executing steering commands directed for controlling the UGV along the path.

US Patent Application Pub. No. 2018/086351 describes that a steering control delay is measured, where the steering delay represents the delay between the time of issuing a steering control command and the time of a response from one or more wheels of an autonomous vehicle. A speed control delay is measured between the time of issuing a speed control command and the tine of a response from one or more wheels of the autonomous vehicle or the time of supplying pressure to the as pedal or brake pedal. In response to a given route subsequently, an overall system delay is determined based on the steering control delay and the speed control delay using a predetermined algorithm. Planning and control data is generated in view of the system delay for operating the autonomous vehicle.

### GENERAL DESCRIPTION

The disclosure relates to navigating a UGV within an area in the presence of obstacles. Navigation can include generating a representation of the area, such as a map or any other internal data structure, the representation comprising indications of the obstacles and a destination of the navigation. The map can then be used for planning a path which leads to the destination while avoiding obstacles. During navigation, steering commands can be provided to the UGV for following the path.

However, a delay (referred to herein as "command execution delay") is known to exist between the time at which a steering command is received by the control systems of the UGV, and the time at which the command is executed. For example, in some cases a delay between 200 milliseconds (msec) and 750 msec is observed. Command execution delay may result, for example, from mechanical latencies and/or processing latencies in different assemblies of the UGV, such as the internal communication system or other electrical or electronic assemblies. Thus, generating a steering command based on a current location of the UGV while ignoring the expected delay may lead to undesired results, such as collision with obstacles or deviations from a designated path. This is so, since the UGV continues to move during the time period of the delay, from its current location according to its current velocity and acceleration, before the current command is executed.

Additionally, previous commands which will be executed prior to execution of a current (more recent) command, may also change the location and direction of the UGV at the time of execution of the current command. For example, a new command may be issued every time data indicating that a trigger event has occurred, is received, (e.g. a timer event when a commands execution is coordinated with time). For example, a timer event can be received every 100 msec, while the command execution delay is 500 msec, thus, according to this example, five commands may be executed between the time a command is issued and the time it is executed. Therefore, the change in UGV location, heading and speed during the command execution delay results from the accumulative change caused by all commands which are executed during the time period of the delay. Thus, in order to safely and efficiently guide the UGV, it is required to consider the effect of these commands.

In accordance with some embodiments of the disclosure, prior to generating a navigation command, the future location, orientation and velocity of the UGV at the (predicted) execution time of the navigation command is estimated, such that the command is generated in accordance with the estimated location, orientation and velocity of the UGV at the time of the command execution. Vehicle parameters such as location, orientation and velocity are collectively referred to herein as "state". This list of parameters is not exhaustive and in some examples it can also include additional parameters such as acceleration, etc. Given a navigation command, in order to estimate the future state of the UGV at the time of its execution, the integrated effect on the UGV state of all pending commands bound to be executed during the command's execution delay, is assessed. Such assessment can be done by processing the commands in the order in which they are received, and, for each command, estimating the effect it will have on the state of the UGV after the previous command has been executed.

Thus, a first aspect of the disclosed subject matter relates to a method of navigating an unmanned ground vehicle, UGV, (100), the UGV comprising a scanning device providing scanning output data and a processing unit (122), wherein the UGV (100) exhibits a delay in execution of navigation commands generated for navigating the UGV (100), the method is characterized by:
before generating a new navigation command, estimating, by the processing unit (122), an expected state of the UGV (100) expected to be when the new navigation command is to be executed, wherein the expected state is estimated based on accumulated effects of execution of one or more pending commands preceding the new navigation command, and which are bound to be executed during a delay in execution of the new navigation command;
generating, by the processing unit (122), the new navigation command based on the expected state; and
following execution of the one or more pending commands, executing the new navigation command, for steering the UGV (100).

In addition to the above features, the method according to this aspect of the presently disclosed subject matter can optionally comprise one or more of features (i) to (vi) listed below, in any technically possible combination or permutation:
i. wherein estimating the expected state of a UGV (100) comprises:
   while there is at least one pending navigation command which has not been processed since generating of the new navigation command has been triggered:
   retrieving by the processing unit (122) an earliest pending navigation command which has not been processed since the generating of the new navigation command has been triggered;
   determining, by the processing unit (122), an expected effect of the earliest pending navigation command on the state of the UGV (100); and updating the expected state of the UGV according to the expected effect.
ii. wherein the at least one pending navigation command comprises a number of commands, the number is determined in accordance with a command generation rate and a period of the delay.
iii. wherein the generation of the new navigation command is triggered responsive to an event selected from a group comprising: a timer and arrival of the UGV (100) to a predetermined location.
iv. The method further comprising:
   following execution of the one or more pending commands, comparing an actual state of the UGV (100) to the expected state of the UGV (100), to obtain comparison results; and
   updating the new navigation command based on the comparison results.
v. The method further comprising:
   following execution of the one or more pending commands, comparing an actual state of the UGV (100) to the expected state of the UGV (100), to thereby obtain comparison results; and
   improving estimation of the expected state based on the comparison results.
vi. The method further comprising updating the new navigation command based on the comparison results.

According to another aspect of the presently disclosed subject matter there is provided an unmanned ground vehicle (UGV), wherein the UGV exhibits a delay in execution of navigation commands generated for navigating the UGV; the UGV comprising: a scanning device for scanning an area surrounding the UGV to thereby provide scanning output data providing information about distances between objects in the area and the UGV in a multiplicity of directions; an Inertial Navigation System (INS) for providing kinematic parameters of the UGV at a given time; and a processor configured to:
before generating a new navigation command, estimate an expected state of the UGV when the new navigation command is to be executed, wherein the expected state is estimated based on accumulated effects caused by execution of one or more pending commands preceding the new navigation command and bound to be executed during a delay in execution of the new navigation command; generate, by the processing unit, the new navigation command based on the expected state; and following execution of the one or more pending commands, execute the new navigation command for steering the UGV (100).

The UGV disclosed in accordance with the aspects of the presently disclosed subject matter detailed above can optionally comprise one or more of features (i) to (vi) listed above, mutatis mutandis, in any technically possible combination or permutation.

According to yet another aspect of the presently disclosed subject matter there is provided a system mountable on an unmanned ground vehicle (UGV), wherein the UGV exhibits a delay in execution of navigation commands generated for navigating the UGV, the system is characterized by
a processing unit configured to:
before generating a new navigation command, estimate an expected state of the UGV when the new navigation command is to be executed, wherein the expected state is estimated based on accumulated effects caused by execution of one or more pending commands preceding the new navigation command and bound to be executed during a delay in execution of the new navigation command; generate, by the processing unit, the new navigation command based on the expected state; and following execution of the one or more pending commands, execute the new navigation command for steering the UGV.

The system disclosed in accordance with the aspects of the presently disclosed subject matter detailed above can optionally comprise one or more of features (i) to (vi) listed above, mutatis mutandis, in any technically possible combination or permutation.

According to yet another aspect of the presently disclosed subject matter there is provided a computer program product comprising a computer readable storage medium retaining program instructions, which programs instructions when read by a processor, and causes the processor to perform a method as described above with respect to the first aspect.

The computer program product disclosed in accordance with the aspects of the presently disclosed subject matter detailed above can optionally comprise one or more of features (i) to (vi) listed above, mutatis mutandis, in any technically possible combination or permutation.

### BRIEF DESCRIPTION OF THE DRAWINGS

In order to understand the invention and to see how it can be carried out in practice, embodiments will be described, by way of non-limiting examples, with reference to the accompanying drawings, in which:
**Fig. 1** illustrates a schematic block diagram of a UGV, in accordance with certain examples of the presently disclosed subject matter;
**Fig. 2** shows a schematic illustration of an environment in which a UGV has to navigate;
**Fig. 3A** illustrates a generalized flow-chart of a method for navigating a UGV in the presence of obstacles, in accordance with certain examples of the presently disclosed subject matter;
**Fig. 3B** illustrates a sequence of commands generated for the UGV, in accordance with certain examples of the presently disclosed subject matter;
**Fig. 4A** illustrates a visual representation of navigating while ignoring delays;
**Fig. 4B** illustrates a visual representation of navigating while considering delays but not considering queued commands; and
**Fig. 4C** illustrates a visual representation of navigating while taking into account delays and queued commands, in accordance with certain examples of the presently disclosed subject matter.

### DETAILED DESCRIPTION

In the following detailed description, numerous specific details are set forth in order to provide a thorough understanding of the invention. However, it will be understood by those skilled in the art that the presently disclosed subject matter may be practiced without these specific details. In other instances, well-known methods, procedures, components and circuits have not been described in detail so as not to obscure the presently disclosed subject matter.

Unless specifically stated otherwise, as apparent from the following discussions, it is appreciated that throughout the specification discussions utilizing terms such as "processing", "computing", "determining", "representing", "comparing", "generating", "assessing", "matching", "updating", "creating" or the like, refer to the action(s) and/or process(es) of a computer that manipulate and/or transform data into other data, said data represented as physical, such as electronic, quantities and/or said data representing the physical objects.

The terms "processor", "computer", "processing unit" or the like should be expansively construed to include any kind of electronic device with data processing circuitry, which includes a computer processor as disclosed herein below (e.g., a Central Processing Unit (CPU), a microprocessor, an electronic circuit, an Integrated Circuit (IC), firmware written for or ported to a specific processor such as digital signal processor (DSP), a microcontroller, a field programmable gate array (FPGA), an application specific integrated circuit (ASIC), etc.) and possibly a computer memory and is capable of executing various data processing operations.

The operations in accordance with the teachings herein may be performed by a computer device specially constructed for the desired purposes or by a general-purpose computer specially configured for the desired purpose by a computer program stored in a computer readable storage medium.

In the following detailed description, numerous specific details are set forth in order to provide a thorough understanding of the invention. However, it will be understood by those skilled in the art that the presently disclosed subject matter can be practiced without these specific details. In other instances, well-known methods, procedures, components and circuits have not been described in detail so as not to obscure the presently disclosed subject matter.

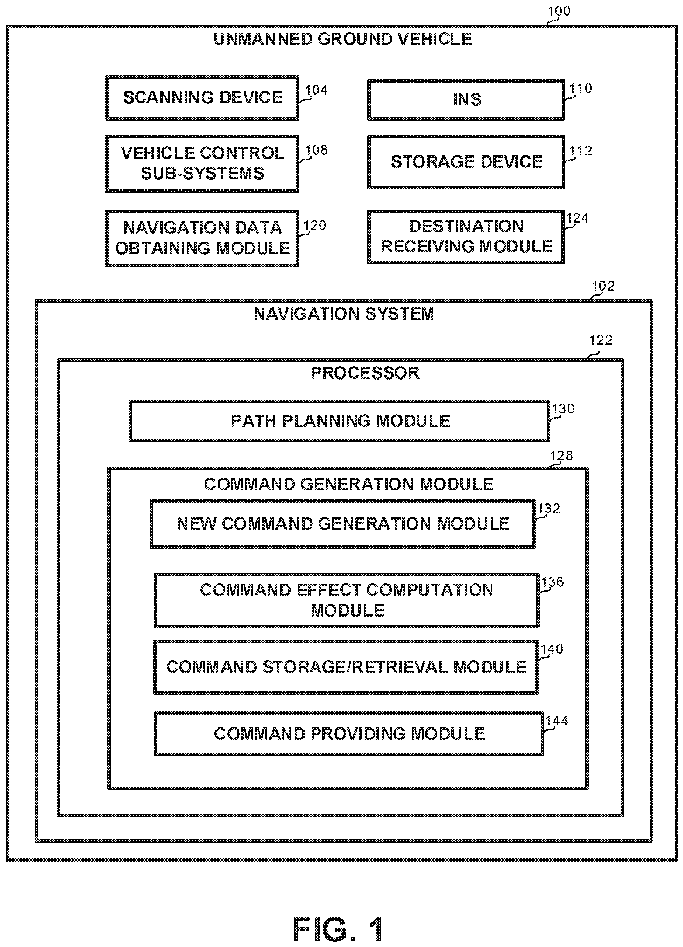

**Fig. 1** illustrates a general schematic block diagram of a UGV in accordance with an embodiment of the presently disclosed subject matter. Each module in **Fig. 1** can be made up of any combination of software, hardware and/or firmware that performs the functions as defined and explained herein. The modules in **Fig. 1** may be centralized in one location or on one device, or dispersed over more than one location or device. In different examples of the presently disclosed subject matter, the system may comprise fewer, more, and/or different modules than those shown in **Fig. 1****.** For example, while processor **122** in Fig. 1 is illustrated within navigation system **102,** in other cases processor **122** can be a separate processor dedicated for executing some operations and externally connected to navigation system **102.**

As will be further detailed with reference to **Fig.** 1, processor **122** comprises a processing circuitry which can be configured to execute several functional modules in accordance with computer-readable instructions implemented on a non-transitory computer-readable storage medium. Such functional modules are referred to hereinafter as comprised in the processor and include for example command generation module **128.**

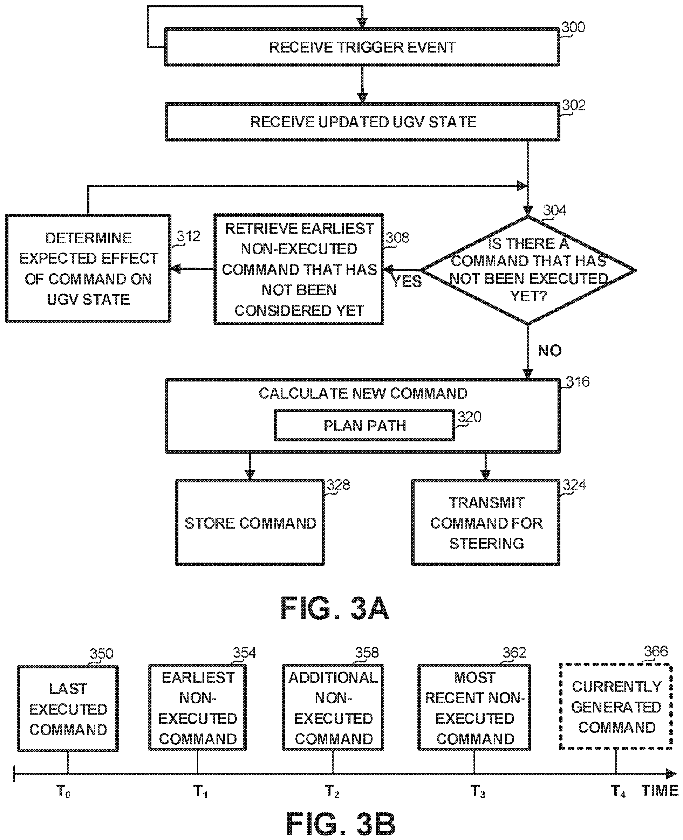

**Fig. 3A** is a flowchart illustrating operations of respective processes, in accordance with the presently disclosed subject matter. In embodiments of the presently disclosed subject matter, fewer, more and/or different stages than those shown in **Fig. 3A** may be executed. In embodiments of the presently disclosed subject matter one or more stages illustrated in **Fig. 3A** may be executed in a different order and/or one or more groups of stages may be executed simultaneously for multiple commands.

A UGV in accordance with the description is equipped with a scanning device configured to scan the area surrounding the UGV, and an INS configured to provide positioning data of the UGV.

The term "scanning device" as used herein should be expansively construed to include any kind of device configured to identify, for objects in the vicinity of the device, their distance and direction relative to the device. Examples of scanning devices include, but are not limited to: laser scanners (including LIDAR), RADAR, images sensor, sonar, etc. A scanning device can scan for example, 360° on a plane surrounding the device, or in some other smaller scanning angle (e.g. 180°). Alternatively, the scanning device can scan a volume such as a sphere, a cylinder or another three dimensional volume or part thereof in the vicinity of the UGV. A scanning device can provide information for generating a 3-dimensional map of the scanned area. In some examples, in order to save resources, a 2.5-dimensional map can be generated, as detailed below.

The term "map" as used herein should be expansively construed to include any data structure representing a geographical area. A map can be absolute, i.e., comprise indications of absolute coordinates of an object or a location, or relative, i.e., comprise information about locations or objects, regardless of their locations in absolute coordinates. A map can be represented on a computerized display device, paper or any other tangible medium.

Reference is now made to **Fig. 1****,** showing a schematic block diagram of a UGV, in accordance with some examples of the disclosure.

UGV **100** can comprise or be otherwise operatively connected to a scanning device **104** configured to scan an area surrounding the vehicle, and provide scanning output data used for generating maps, as further described below.

UGV **100** can further comprise or be otherwise operatively connected to vehicle control sub-systems **108** including for example steering control unit, gear control unit, throttle control unit, etc. Vehicle control sub-systems **108** are configured to receive vehicle control commands (e.g., steering instructions) and control UGV **100** accordingly. Such commands include, by way of example "gas 30%, yaw rate 50%", "turn right", "brake", or the like. It will be appreciated that in order to avoid a situation in which a command has not been completed by the time the next command is to be executed, commands are not defined by their target, such as "go 20m north", but rather by the operation to be undertaken, such as "gas 20%". It will be appreciated that the terms "instruction", "navigation instruction", "command" and "navigation command" as used below, are interchangeable.

UGV **100** can further comprise or be otherwise operatively connected to an Inertial Navigation System (INS) **110.** An INS calculates the kinematic parameters of the UGV based upon readings received from an Inertial Measurement Unit (IMU). The kinematic parameters of the UGV are tracked relative to the parameters at a starting position, thus providing for assessing the parameters at a given time based on previous values.

UGV **100** can further comprise one or more computer storage devices **112** for storing information such as one or more maps, information on obstacles, navigation commands, or the like.

UGV **100** can comprise by way of example, navigation data obtaining module **120,** configured for receiving readings from scanning device **104** and creating or updating one or more maps representing one or more areas in the vicinity of the UGV.

UGV **100** can further comprise destination receiving module **124** for obtaining a destination to which UGV **100** has to arrive. Destination receiving module **124** can comprise or utilize components such as but not limited to: a Global Positioning System (GPS); a communication unit for receiving a location or commands from an external source; a camera and a computerized vision system for capturing images of the environment and identifying in the images a predetermined sign indicating a target destination. The indication can include for example visible or invisible light, a predetermined gesture performed by a person or a machine, or the like.

UGV **100** can comprise navigation system **102.** It will be appreciated that navigation system **102** can comprise components, some of which can also serve other purposes, and that components of navigation system **102** can be located at different parts of UGV **100** or, in some examples, be external to it. Further, navigation system **102** can also receive services from and communicate with other components of UGV **100** or external components or systems.

Navigation system **102** can comprise or be otherwise operatively connected to one or more processing units for controlling and executing various operations, as disclosed herein. Each processing unit comprises a respective processing circuitry comprising at least one computer processor which can be, for example, operatively connected to a computer-readable storage device having computer instructions stored thereon to be executed by the computer processor.

According to one example, different functional elements (units, modules) in navigation system **102** can be implemented as a dedicated processing unit comprising a dedicated computer processor and computer storage for executing specific operations.

Additionally or alternatively, one or more functional elements can be operatively connected to a common processing unit configured to execute operations according to instructions stored in the functional elements.

For example, navigation system **102** can comprise one or more processing circuitries ( one is illustrated by way of example to include processor **122**), which can be configured to execute several functional modules in accordance with computer-readable instructions stored on a non-transitory computer-readable medium (e.g. storage device **112**) operatively connected to processor **122.** For illustrative purposes, such functional modules are referred to hereinafter as comprised in the processor. By way of example, other modules illustrated outside of processor **122** can be operatively connected and executed by the same processor in the same processing circuitry or by a different processor of a different processing circuitry.

Processor **122** can comprise by way of example path planning module **130** and command generation module **128.**

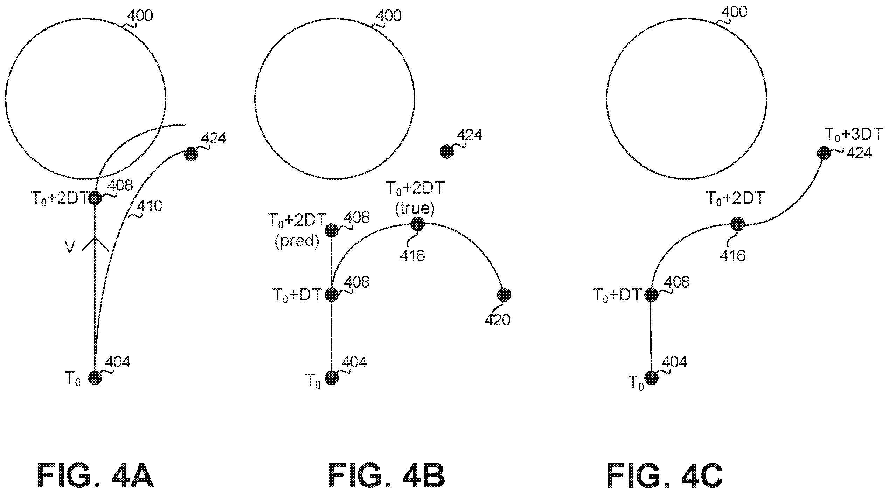

Path planning module **130** can be configured to receive a map of an area around the UGV. The map can be generated, for example, based on scanning output data provided by scanning device **104,** and a destination, as obtained for example by destination receiving module **124.** Path planning module **130** can then plan a path from a current location of the UGV to the destination. The path should avoid obstacles or other areas which are undesired, and comply with additional limitations such as pitch and roll angles allowed for the UGV, or the like. The path can be planned, for example, as described in Israeli Patent Application no 253769 filed July 31, 2017, and particularly as explained in Fig. 3 and exemplified in Fig. 4 and the associated description: page 16 line 18 to page 23 line 25 of said application.

Command generation module **128** can comprise new command generation module **132,** for generating a new navigation command for navigating the UGV. A navigation command is generated in order to direct the UGV in a desired direction and speed (e.g. based on a predefined progression path) and is based on the expected or predicted state of the UGV following the command execution delay, i.e., at the time the command is executed. Thus, the command generation module uses the predicted state of the UGV after all outstanding navigation commands are executed when calculating the next command that will advance the UGV along the path. If required, for example if the UGV deviated from the planned path, command generation module **128** can activate path planning module **130** to generate an updated or enhanced path to be followed.

Command generation module **128** can comprise command effect computation module **136,** for determining a predicted state of the UGV, given an initial state of the UGV and a navigation command to be executed by the UGV. The predicted state is the state the UGV is predicted to assume after execution of the navigation command, for example once the navigation command has been executed, at a predetermined time after the navigation command has been executed, when a following command is to be executed, or the like.

Command generation module **128** can comprise command storage/retrieval module **140** for storing and retrieving commands, which may be used in generating further commands as detailed below. The commands may be stored in and retrieved from any volatile or persistent storage device, such as storage device **112.**

Command generation module **128** can comprise command providing module **144** for providing the newly generated command to vehicle control sub-systems **108,** storing the command in storage device **112,** or the like.

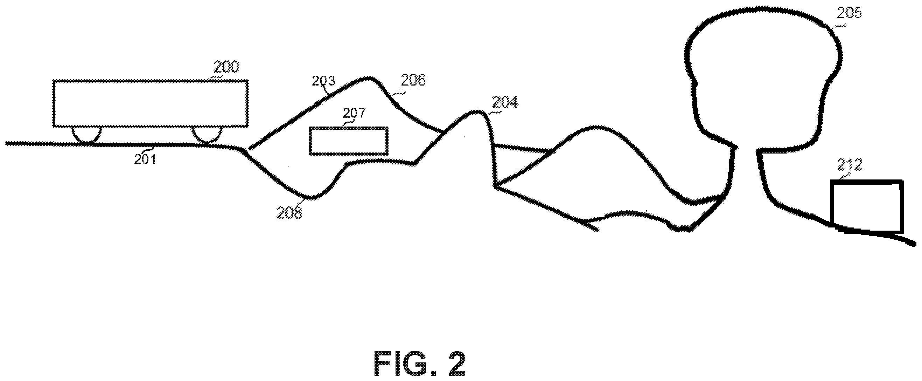

Reference is now made to **Fig. 2****,** showing a schematic illustration of an example of an environment in which UGV **200** has to navigate from a current location to target location **212.** The environment may comprise obstacles such as positive obstacle **204,** which is above ground level, negative obstacle **208** which is below ground level, overhead obstacle **205** such as a tree or a bridge, ground level obstacle **207,** inclined terrain **203** or **206** or steep terrain **204** which may be for example a back, side or front slope. All these obstacles are non-traversable for UGV **200** and have to be avoided. It will be appreciated that some objects present an obstacle when accessed from one side, but not when accessed from another side. For example, a ramp may present an obstacle when accessed from the side, but not when accessed from the front or rear.

Reference is now made to **Fig. 3A****,** showing a flowchart of a method for navigating a UGV, in accordance with certain examples of the presently disclosed subject matter, and to **Fig. 3B** illustrating a sequence of commands generated for the UGV.

According to some examples, operations described with reference to Fig. **3A** can be executed by elements shown in **Fig. 1****,** including processor **122** and are thus described below with reference to the appropriate elements of **Fig. 1****,** however this is done by way of example only and should not be construed as limiting.

With respect to the example of **Fig. 3B****,** at time T₄ a command 366 is being generated, wherein the last command that has been executed is command 350 provided at time t₀, while commands 354, 358 (which may represent multiple commands- but they are multiple commands) and 362, generated at times Ti, T₂ and T₃, respectively, are pending, i.e., are expected to be executed. It will be appreciated that the number of non-executed commands pending at time T₄ may depend on the ratio between the delay time of a command and the command generation rate. For example, if the delay time of a command is 300 msec and a new command is generated every 100 msec, then there may be three pending commands to be considered when each new command is being generated.

In some embodiments, the pending commands may be arranged in a computer memory as a queue, such that the commands are retrieved from the memory for execution in the same order in which they are generated and stored, a scheme referred to as first-in-first-out (FIFO). When a command arrives to the head of the queue, it is retrieved from the queue and executed. Thus, at any given time, the queue may contain the pending commands awaiting execution. In the example of **Fig. 3B****,** command **350** is the last command that has been retrieved from the queue, commands **354, 358** and **362** are in the queue and will be retrieved and executed in this order, and once command **366** is generated it will be entered into the queue as well, and will be retrieved for execution after commands **354, 358** and **362.**

At block **300,** a trigger event indication, indicating that an event that triggers generation of a new navigation command has occurred, **366,** may be received. A trigger for generating navigation command **366** can be for example a timer interrupt where a new navigation command is generated in coordination with time e.g. at least every predetermined time period. In some examples, generation of a new navigation command is triggered at intervals of 50-1000 msec. Other trigger events may be the arrival to a predetermined location such as an end of a segment of the path, deviation of more than a predetermined distance from a followed path, detection of an obstacle at a distance shorter than a certain threshold, or the like. It will be appreciated that these examples are not exhaustive and various other triggers may likewise initiate the generation of a new command.

At block **302,** the current state of the UGV is determined (for example by command generation module **128**). The UGV state can be received, for example, by combining a previously known state and information received from INS **110** indicating changes in the vehicle parameters.

At block **304,** it is determined, (e.g. by command storage/retrieval module **132**) whether there exist pending navigation commands, i.e., navigation commands that have been previously generated but have not yet been executed, as a result of the command execution delay, and thus have not yet affected the state of the UGV. In the example of **Fig. 3B****,** commands **354, 358** and **352** have not yet been executed, and are thus pending.

Each pending command that has not been considered, starting with the earliest pending command such as command **354** in the example of **Fig. 3B****,** is retrieved (block **308**). At block **312,** the effect of executing the command on the state of the UGV is estimated. Estimation of the command effect may take into account the command itself, e.g. its duration, direction, amplitude, or the like, as well as steering characteristics of the UGV. According to some examples, pending commands are retrieved from storage device **112** by command storage/retrieval module **132.**

The estimated effect of executing the pending command on the state of the UGV is determined (e.g. by effect computation module **136**) to thereby obtain a predicted state of the UGV following execution of the pending command.

Operations described with reference to blocks **304, 308** and **312** are repeated for each pending command according to the order in which the commands were issued. Thus, after command **354** is processed, the earliest non-executed command that has not yet been considered is command **358** (or the earliest of the commands represented by command **358** if command **358** represents multiple commands), which is followed by command **362,** and the effect of each of command(s) **358** and **362** on the state of the UGV is determined. It will be appreciated that for each additional command, the "future UGV state" that was determined with respect to the previous pending command (block 312) serves as the starting state for calculating the effect of the additional command.

When the earliest pending command, e.g., command **354** is processed according to block **312,** the starting state of the UGV is its measured current state (as described with reference to block **302**), while for each additional command processed according to block **312,** the resulting UGV state that was determined with respect to the previous pending command (block **312**) serves as the starting state for calculating the effect of the additional command.

Once the accumulative effect of all pending commands is determined and the estimated UGV state following execution of all pending commands (the starting state) is determined, at block **316** a new command **366** is generated. The command generation can be performed for example, by new command generation module **140.** The command can be determined for directing the UGV along a path leading from the location related to the starting state to a destination location of the UGV as indicated by destination receiving module **124.**

It will be appreciated that according to this example, since the command execution delay may be longer than the time difference between two consecutive trigger events, multiple trigger events may be received during the delay period. In **Fig. 3B****,** if for example command **358** represents a single command, then during the delay between the generation and execution of command **366,** commands **354, 358** and **362** will be executed. Therefore, the effect of executing each navigation command can be determined as part of generating multiple new commands, until the navigation command itself is executed. In the example of Fig. **3B****,** the effect of command **354** is determined during generation of commands **358, 362** and**366** . In order to enhance efficiency, the starting state of each command and its respective effect can be stored. During the determination of further commands, if one of the pending commands has the same starting state as the stored state, the effect of the command and of all later commands will be the same and can thus be retrieved from the computer storage rather than re-calculated, thereby saving time and computation resources.

In some situations, for example if the UGV state estimated following a command deviates significantly, e.g. is beyond a predefined threshold from the planned path that is being followed, then a new path may be planned at block **320,** for example by path planning module **130.** The new path is planned to lead from the estimated location of the UGV to the destination. The new command can then be generated to cause the UGV to advance along the new path, or to take another action, for example reduce the UGV velocity, if the response of the UGV is not as expected, or a mistake was introduced, for example in planning a previous command.

Reference is made now also to **Figs. 4A-4C****,** demonstrating the provision of navigation commands in accordance with the disclosure.

**Fig. 4A** shows the UGV at time T₀ at position **404,** with a velocity in the direction of vector V going from point **404** to point **408,** and a destination location **424.** Without considering delays and pending commands that have not been executed yet, a command that will drive the UGV along arc **410** to point **424** may be planned. However, due to the UGV state and velocity, the command is executed at time T₀+2DT, after the 2DT command execution delay. At T₀+2DTthe UGV assumes position **408.** Performing the generated command at time T₀+2DT will cause the UGV to hit obstacle **400,** and miss the destination.

**Fig. 4B** shows the UGV at time T₀ at the same position **404** and velocity V as in **Fig. 4A****.** In this situation, a command execution delay of 2DT length is taken into account, and the location at which the UGV is expected to be at time T₀+2DT is estimated as point **408.** However, at time T₀+DT a previous command is executed, which has an effect such that at time T₀+2DT the UGV actually assumes position **416.** Performing the command as planned at time T₀+2DT would therefore cause the UGV to assume position **420,** which diverts it from destination **424.**

**Fig. 4C** shows the UGV at time T₀ at the same position **404** and velocity V as in **Fig. 4A****.** In this situation, the command execution delay is taken into account, as well as the commands that are expected to be performed before the currently planned command. Thus, the effect of a previously planned command starting at time T₀+DT will be determined, which is expected to cause the UGV to arrive to location **416** at time T₀+2DT. Then a command may be planned to bring the UGV to location **424** at time T₀+3DT. Thus, considering the provided commands, a newly generated command starts where it is supposed to start, and thus has the expected effect. This will provide for following the path as planned and arriving at the destination, without hitting obstacles.

Reference is now made back to **Fig. 3****.** At block **324,** once new command **366** is generated, it may be provided to vehicle control sub-systems **108,** and the UGV is steered accordingly after all preceding commands are executed.

At block **328,** the command may also be provided to command storage/retrieval module **132** which can store it in a storage device such as storage device **112.** Storing the command will provide for estimating its effect when future commands are to be planned, as described above.

In some examples of the disclosure, the state of the UGV as estimated to be following execution of one or more commands, can be stored. Once the command has been performed, the actual state can be obtained and compared to the expected state. The comparison results of the pairs of corresponding expected and actual states can then be determined and used for updating and improving the expected states obtained on block **312.** For example, if a substantially constant difference is determined, the difference can be added to (or subtracted from, depending on what state is subtracted from the other) the expected state. If the difference follows another pattern or function, this pattern or function can be applied to the expected state, thus providing for generating commands that indeed start at the expected state and cause the expected effect.

It is noted that the teachings of the presently disclosed subject matter are not bound by the components described in **Fig. 1****,** and to the blocks described on **Fig. 3****.** Equivalent and/or modified functionality can be consolidated or divided in another manner and can be implemented in any appropriate order or combination of software, firmware and hardware and executed on a suitable device.

## Claims

1. A method of navigating an unmanned ground vehicle, UGV, (100), the UGV comprising a scanning device providing scanning output data and a processing unit (122), wherein the UGV (100) exhibits a delay in execution of navigation commands generated for navigating the UGV (100), the method is **characterized by**:
before generating a new navigation command, estimating, by the processing unit (122), an expected state of the UGV (100) expected to be when the new navigation command is to be executed, wherein the expected state is estimated based on accumulated effects of execution of one or more pending commands preceding the new navigation command, and which are bound to be executed during a delay in execution of the new navigation command;
generating, by the processing unit (122), the new navigation command based on the expected state; and
following execution of the one or more pending commands, executing the new navigation command, for steering the UGV (100).

2. The method of Claim 1, wherein estimating the expected state of a UGV (100) comprises:
while there is at least one pending navigation command which has not been processed since generating of the new navigation command has been triggered:
retrieving by the processing unit (122) an earliest pending navigation command which has not been processed since the generating of the new navigation command has been triggered
determining, by the processing unit (122), an expected effect of the earliest pending navigation command on the state of the UGV (100); and updating the expected state of the UGV according to the expected effect.

3. The method of any one of the preceding claims, wherein the at least one pending navigation command comprises a number of commands, the number is determined in accordance with a command generation rate and a period of the delay.

4. The method of any one of claims 2 to 3, wherein the generation of the new navigation command is triggered responsive to an event selected from a group comprising: a timer and arrival of the UGV (100) to a predetermined location.

5. The method of any one of the preceding claims further comprising:
following execution of the one or more pending commands, comparing an actual state of the UGV (100) to the expected state of the UGV (100), to obtain comparison results; and
updating the new navigation command based on the comparison results.

6. The method of any one of the preceding claims further comprising:
following execution of the one or more pending commands, comparing an actual state of the UGV (100) to the expected state of the UGV (100), to thereby obtain comparison results; and
improving estimation of the expected state based on the comparison results.

7. The method of claim 6 further comprising updating the new navigation command based on the comparison results.

8. A system mountable on an unmanned ground vehicle, UGV, (100) wherein the UGV (100) exhibits a delay in execution of navigation commands generated for navigating the UGV (100), the system is **characterized by** a processing unit (122) configured to:
before generating a new navigation command, estimate an expected state of the UGV (100) when the new navigation command is to be executed, wherein the expected state is estimated based on accumulated effects caused by execution of one or more pending commands preceding the new navigation command and bound to be executed during a delay in execution of the new navigation command;
generate, by the processing unit (122), the new navigation command based on the expected state; and
following execution of the one or more pending commands, execute the new navigation command for steering the UGV (100).

9. The system of Claim 8, wherein the processing unit (122) is configured for estimating the expected state of the UGV (100) to:
while there is at least one pending navigation command which has not been processed since the generating of the new navigation command has been triggered:
retrieve by the processing unit (122) an earliest pending navigation command which has not been processed since the generating of the new navigation command has been triggered; and
determine an expected effect of the earliest pending navigation command on the state of the UGV to update the expected state of the UGV (100).

10. The system of any one of claims 8 to 9, wherein the processing unit (122) is further configured to:
compare a current state of the UGV (100) with a state predicted in association with generating a previous command to obtain comparison results; and
adapt the new navigation command in accordance with the comparison results.

11. The system of Claim 10 wherein the processing unit (122) is further configured to:
store a state of the UGV (100) expected to be after execution of one or more commands;
upon execution of the one or more commands, compare an actual state of the UGV (100) to the state of the UGV (100), to obtain comparison results; and
update the new navigation command based on the comparison results.

12. An unmanned ground vehicle, UGV, (100), wherein the UGV (100) exhibits a delay in execution of navigation commands generated for navigating the UGV (100), the UGV (100) comprising a scanning device for scanning an area surrounding the UGV (100) to thereby provide scanning output data providing information about distances between objects in the area and the UGV (100) in a multiplicity of directions;
the UGV (100) further comprising the system according to any one of claims 8 to 11.

13. A computer program product comprising a computer readable storage medium retaining instructions, the instructions when read by a processing unit cause the processing unit to perform a method according to any of claims 1 to 7.

## Patentansprüche

1. Verfahren zum Navigieren eines unbemannten Bodenfahrzeugs (UGV) (100), wobei das UGV eine Abtastvorrichtung, die Abtastausgangsdaten bereitstellt, und eine Verarbeitungseinheit (122) umfasst, wobei das UGV (100) eine Verzögerung bei der Ausführung von Navigationsbefehlen aufweist, die zum Navigieren des UGV (100) erzeugt werden, wobei das Verfahren durch Folgendes gekennzeichnet ist:
vor dem Erzeugen eines neuen Navigationsbefehls, Schätzen, durch die Verarbeitungseinheit (122), eines erwarteten Zustands des UGV (100), der erwartet wird, wenn der neue Navigationsbefehl auszuführen ist, wobei der erwartete Zustand auf der Grundlage von akkumulierten Auswirkungen der Ausführung eines oder mehrerer anstehender Befehle, die dem neuen Navigationsbefehl vorausgehen und die während einer Verzögerung bei der Ausführung des neuen Navigationsbefehls ausgeführt werden müssen, geschätzt wird;
Erzeugen des neuen Navigationsbefehls durch die Verarbeitungseinheit (122) auf der Grundlage des erwarteten Zustands; und,
nach der Ausführung des einen oder der mehreren anstehenden Befehle, Ausführen des neuen Navigationsbefehls, um das UGV (100) zu steuern.

2. Verfahren nach Anspruch 1, wobei das Schätzen des erwarteten Zustands eines UGV (100) Folgendes umfasst:
während mindestens ein ausstehender Navigationsbefehl vorliegt, der seit dem Auslösen der Erzeugung des neuen Navigationsbefehls noch nicht verarbeitet wurde:
Abrufen eines frühesten anstehenden Navigationsbefehls durch die Verarbeitungseinheit (122), der seit dem Auslösen der Erzeugung des neuen Navigationsbefehls noch nicht verarbeitet wurde;
Bestimmen, durch die Verarbeitungseinheit (122), einer erwarteten Auswirkung des frühesten anstehenden Navigationsbefehls auf den Zustand des UGV (100); und Aktualisieren des erwarteten Zustands des UGV gemäß der erwarteten Auswirkung.

3. Verfahren nach einem der vorhergehenden Ansprüche, bei dem der mindestens eine anstehende Navigationsbefehl eine Anzahl von Befehlen umfasst, wobei die Anzahl in Abhängigkeit von einer Befehlserzeugungsrate und einer Verzögerungsdauer bestimmt wird.

4. Verfahren nach einem der Ansprüche 2 bis 3, wobei das Erzeugen des neuen Navigationsbefehls in Reaktion auf ein Ereignis ausgelöst wird, das aus einer Gruppe ausgewählt wird, die Folgendes umfasst: einen Zeitgeber und die Ankunft des UGV (100) an einem vorbestimmten Ort.

5. Verfahren nach einem der vorherigen Ansprüche, ferner umfassend:
nach Ausführung des einen oder der mehreren anstehenden Befehle, Vergleichen eines tatsächlichen Zustands des UGV (100) mit dem erwarteten Zustand des UGV (100), um Vergleichsergebnisse zu erhalten; und
Aktualisieren des neuen Navigationsbefehls auf der Grundlage der Vergleichsergebnisse.

6. Verfahren nach einem der vorherigen Ansprüche, ferner umfassend:
nach Ausführung des einen oder der mehreren anstehenden Befehle, Vergleichen eines tatsächlichen Zustands des UGV (100) mit dem erwarteten Zustand des UGV (100), um dadurch Vergleichsergebnisse zu erhalten; und
Verbessern der Schätzung des erwarteten Zustands auf der Grundlage der Vergleichsergebnisse.

7. Verfahren nach Anspruch 6, das ferner das Aktualisieren des neuen Navigationsbefehls auf der Grundlage der Vergleichsergebnisse umfasst.

8. System, das an einem unbemannten Bodenfahrzeug (UGV) (100) angebracht werden kann, wobei das UGV (100) eine Verzögerung bei der Ausführung von Navigationsbefehlen aufweist, die zum Navigieren des UGV (100) erzeugt werden, wobei das System durch eine Verarbeitungseinheit (122) gekennzeichnet ist, die so konfiguriert ist, dass sie:
vor dem Erzeugen eines neuen Navigationsbefehls einen erwarteten Zustand des UGV (100) schätzt, wenn der neue Navigationsbefehl auszuführen ist, wobei der erwartete Zustand auf der Grundlage von akkumulierten Auswirkungen geschätzt wird, die durch die Ausführung eines oder mehrerer anstehender Befehle verursacht werden, die dem neuen Navigationsbefehl vorausgehen und während einer Verzögerung bei der Ausführung des neuen Navigationsbefehls ausgeführt werden müssen;
den neuen Navigationsbefehls durch die Verarbeitungseinheit (122) auf der Grundlage des erwarteten Zustands erzeugt; und
nach der Ausführung des einen oder der mehreren anstehenden Befehle den neuen Navigationsbefehl zur Steuerung des UGV (100) ausführt.

9. System nach Anspruch 8, wobei die Verarbeitungseinheit (122) so konfiguriert ist, dass sie den erwarteten Zustand des UGV (100) schätzt, um:
während mindestens ein ausstehender Navigationsbefehl vorliegt, der seit dem Auslösen der Erzeugung des neuen Navigationsbefehls noch nicht verarbeitet wurde:
durch die Verarbeitungseinheit (122) einen frühesten anstehenden Navigationsbefehl abzurufen, der seit dem Auslösen der Erzeugung des neuen Navigationsbefehls noch nicht verarbeitet wurde;
und
eine erwartete Auswirkung des frühesten anstehenden Navigationsbefehls auf den Zustand des UGV zu bestimmen, um den erwarteten Zustand des UGV (100) zu aktualisieren.

10. System nach einem der Ansprüche 8 bis 9, wobei das Verarbeitungsmodul (122) ferner konfiguriert ist:
einen aktuellen Zustand des UGV (100) mit einem in Verbindung mit dem Erzeugen eines vorherigen Befehls vorhergesagten Zustand zu vergleichen, um Vergleichsergebnisse zu erhalten; und
den neuen Navigationsbefehl entsprechend den Vergleichsergebnissen anzupassen.

11. System nach Anspruch 10, wobei das Verarbeitungsmodul (122) ferner konfiguriert
ist:
einen Zustand des UGV (100) zu speichern, der nach Ausführung eines oder mehrerer Befehle erwartet wird;
bei Ausführung des einen oder der mehreren Befehle einen tatsächlichen Zustand des UGV (100) mit dem Zustand des UGV (100) zu vergleichen, um Vergleichsergebnisse zu erhalten; und
den neuen Navigationsbefehl auf der Grundlage der Vergleichsergebnisse zu aktualisieren.

12. Unbemanntes Bodenfahrzeug (UGV) (100), wobei das UGV (100) eine Verzögerung bei der Ausführung von Navigationsbefehlen aufweist, die zum Navigieren des UGV (100) erzeugt werden, wobei das UGV (100) eine Abtastvorrichtung zum Abtasten eines das UGV (100) umgebenden Bereichs umfasst, um dadurch Abtastausgangsdaten bereitzustellen, die Informationen über Abstände zwischen Objekten in dem Bereich und dem UGV (100) in einer Vielzahl von Richtungen liefern;
das UGV (100) umfasst ferner das System nach einem der Ansprüche 8 bis 11.

13. Computerprogrammprodukt mit einem computerlesbaren Speichermedium, das Befehle enthält, wobei die Befehle, wenn sie von einer Verarbeitungseinheit gelesen werden, die Verarbeitungseinheit veranlassen, ein Verfahren nach einem der Ansprüche 1 bis 7 durchzuführen.

## Revendications

1. Procédé de navigation d'un véhicule terrestre sans pilote (UGV) (100), le véhicule comprenant un dispositif de balayage fournissant des données de sortie de balayage et une unité de traitement (122), dans lequel l'UGV (100) présente un retard dans l'exécution des commandes de navigation générées pour la navigation de l'UGV (100), le procédé est **caractérisée par** :
avant de générer une nouvelle commande de navigation, l'unité de traitement (122) estime l'état prévu de l'UGV (100) au moment où la nouvelle commande de navigation doit être exécutée, l'état prévu étant estimé sur la base des effets cumulés de l'exécution d'une ou plusieurs commandes en attente précédant la nouvelle commande de navigation et devant être exécutées pendant un retard dans l'exécution de la nouvelle commande de navigation ;
générer, par l'unité de traitement (122), la nouvelle commande de navigation sur la base de l'état prévu ; et
après l'exécution des une ou plusieurs commandes en attente, exécuter la nouvelle commande de navigation pour diriger l'UGV (100).

2. Procédé selon la revendication 1, dans lequel l'estimation de l'état attendu d'un UGV (100) comprend :
alors qu'il existe au moins une commande de navigation en attente qui n'a pas été traitée depuis que la génération de la nouvelle commande de navigation a été déclenchée :
l'unité de traitement (122) récupère une commande de navigation en attente la plus ancienne qui n'a pas été traitée depuis le déclenchement de la génération de la nouvelle commande de navigation ;
déterminer, par l'unité de traitement (122), l'effet attendu de la première commande de navigation en attente sur l'état de l'UGV (100) ; et mettre à jour l'état attendu de l'UGV en fonction de l'effet attendu.

3. Procédé selon l'une quelconque des revendications précédentes, dans lequel l'au moins une commande de navigation en attente comprend un certain nombre de commandes, le nombre étant déterminé en fonction d'un taux de génération de commandes et d'une période de retard.

4. Procédé selon l'une quelconque des revendications 2 à 3, dans lequel la génération de la nouvelle commande de navigation est déclenchée en réponse à un événement sélectionné dans un groupe comprenant : une minuterie et l'arrivée de l'UGV (100) à un emplacement prédéterminé.

5. Procédé selon l'une quelconque des revendications précédentes, comprenant en outre :
après l'exécution de l'une ou plusieurs commandes en attente, comparer un état réel de l'UGV (100) à l'état prévu de l'UGV (100), afin d'obtenir des résultats de comparaison ; et
mettre à jour la nouvelle commande de navigation sur la base des résultats de la comparaison.

6. Procédé selon l'une quelconque des revendications précédentes, comprenant en outre :
après l'exécution de l'une ou plusieurs commandes en attente, comparer un état réel de l'UGV (100) à l'état prévu de l'UGV (100), afin d'ainsi obtenir des résultats de comparaison ; et
améliorer l'estimation de l'état attendu sur la base des résultats de la comparaison.

7. Procédé selon la revendication 6 comprenant en outre la mise à jour de la nouvelle commande de navigation sur la base des résultats de la comparaison.

8. Système pouvant être monté sur un véhicule terrestre sans pilote (UGV) (100) dans lequel l'UGV (100) présente un retard dans l'exécution des commandes de navigation générées pour la navigation de l'UGV (100), le système est **caractérisé par** une unité de traitement (122) configurée pour :
avant de générer une nouvelle commande de navigation, estimer un état prévu de l'UGV (100) lorsque la nouvelle commande de navigation doit être exécutée, l'état prévu étant estimé sur la base des effets cumulés causés par l'exécution d'une ou plusieurs commandes en attente précédant la nouvelle commande de navigation et devant être exécutées pendant un délai dans l'exécution de la nouvelle commande de navigation ;
générer, par l'unité de traitement (122), la nouvelle commande de navigation sur la base de l'état prévu ; et
après l'exécution des une ou plusieurs commandes en attente, exécuter la nouvelle commande de navigation pour diriger l'UGV (100).

9. Système selon la revendication 8, dans lequel l'unité de traitement (122) est configurée pour estimer l'état prévu de l'UGV (100) pour :
alors qu'il existe au moins une commande de navigation en attente qui n'a pas été traitée depuis que la génération de la nouvelle commande de navigation a été déclenchée :
l'unité de traitement (122) récupère une commande de navigation en attente la plus ancienne qui n'a pas été traitée depuis le déclenchement de la génération de la nouvelle commande de navigation ;
et
déterminer l'effet attendu de la première commande de navigation en attente sur l'état de l'UGV afin de mettre à jour l'état attendu de l'UGV (100).

10. Système selon l'une quelconque des revendications 8 à 9, dans lequel l'unité de traitement (122) est en outre configurée pour :
comparer un état actuel de l'UGV (100) à un état prédit en association avec la génération d'une commande précédente afin d'obtenir des résultats de comparaison ; et
adapter la nouvelle commande de navigation en fonction des résultats de la comparaison.

11. Système selon la revendication 10, dans lequel l'unité de traitement (122) est en outre configurée
pour :
stocker un état de l'UGV (100) prévu après l'exécution d'une ou de plusieurs commandes ;
lors de l'exécution d'une ou plusieurs commandes, comparer un état réel de l'UGV (100) à l'état de l'UGV (100), afin d'obtenir des résultats de comparaison ; et
mettre à jour la nouvelle commande de navigation en fonction des résultats de la comparaison.

12. Véhicule terrestre sans pilote (UGV) (100), dans lequel l'UGV (100) présente un retard dans l'exécution des commandes de navigation générées pour la navigation de l'UGV (100), l'UGV (100) comprenant un dispositif de balayage pour balayer une zone entourant l'UGV (100) afin de fournir des données de sortie de balayage fournissant des informations sur les distances entre des objets dans la zone et l'UGV (100) dans une multiplicité de directions ;
l'UGV (100) comprenant en outre le système selon l'une quelconque des revendications 8 à 11.

13. Programme informatique comprenant un support de stockage lisible par ordinateur contenant des instructions, les instructions, lorsqu'elles sont lues par une unité de traitement, amènent l'unité de traitement à exécuter un procédé selon l'une quelconque des revendications 1 à 7.
